# EUROPEAN PATENT APPLICATION

(11) **EP 4 510 541 A1**
(43) Date of publication of application: **19.02.2025**
(21) Application number: 23191259.3
(22) Date of filing: 14.08.2023
(51) Int. Cl.: H04L 67/568, H04L 1/00, H04L 12/46, H04L 67/63, H04L 67/12, H04L 12/66, H04L 67/2876

(54) **DATA SENDING METHOD, ENTRY GATEWAY AND COMMUNICATION STATION, AS WELL AS DATA RECEIVING METHOD, EXIT GATEWAY AND VEHICLE COMPRISING SAME**

(71) Applicant: Airbus S.A.S., 31700 Blagnac (FR)
(72) Inventor: Milheiro Mendes, Paulo-Jorge, 82024 Taufkirchen (DE)
(74) Representative: OTN Airbus SAS

(57) **Abstract**

A data sending method for sending an internet data packet (20) from at least one sender (A) via a data entry gateway (1) connected to an ICN infrastructure (10) to at least one receiver (B), and a data receiving method for receiving with at least one receiver (B) an internet data packet (20) from at least one sender (A) via a data exit gateway (2) connected to an ICN infrastructure (10), as well as a corresponding data entry gateway (1), a corresponding data exit gateway (2), and a communication station (5), and a vehicle (6) comprising respective gateways (1, 2), are described.

## Description

### Technical Field

The present description relates to the field of enabling communication between information-centric networking (ICN) based infrastructures and an infrastructure that is based on a host-centric paradigm, commonly known as the Internet. In particular, the disclosure relates to a sending method for sending an internet data packet from at least one sender via a data entry gateway connected to an ICN infrastructure to at least one receiver, a data entry gateway configured to carry out the steps of a data sending method, a communication station comprising at least one data entry gateway, a data receiving method for receiving with at least one receiver an internet data packet from at least one sender via a data exit gateway connected to an ICN infrastructure, a data exit gateway configured to carry out the steps of a data receiving method, and a vehicle, in particular an aircraft, comprising at least one data exit gateway.

### Technical Background

Information Centric Networking (ICN) infrastructures have been emerging since around the year 2006 and have been proposed as an alternative approach to communication via the Internet. The ICN paradigm can be seen as particularly suited for any applications with unstable or intermittent connectivity and therefore relies on data storage within the ICN infrastructure itself, e.g. in that an end-host caches certain information in order to be retrieved by a client through sending a respective ICN data interest message and then receiving a corresponding ICN data packet, thus avoiding the need for establishing a relatively stable data connection between a client and a host, such as it is commonly the case in TCP/IP communications.

The migration process from host-based packet switching as used in the current Internet, to a named-based communication paradigm is inevitable in the next decades. However, today's Internet applications are not compatible with ICN protocols and there is no straightforward way of rapidly switching protocol architectures, as could be seen in the migration from IPv4 to IPv6.

A vast number of applications use TCP such as web browsing (HTTP), email (SMTP/POP, IMAP), routing (BGP), as well as UDP traffic such as QUIC, DNS (also work over TCP) and multicast services. Therefore, it is essential for network operators deploying ICN in their infrastructure to provide backward compatibility with TCP/UDP transport. Network operators incrementally deploying an ICN infrastructure will have to provide compatibility with existing TCP/UDP applications and manage co-existence of IP and ICN networks. One approach to co-existence is to allow TCP/UDP applications to work transparently over an ICN substrate instead of over IP.

Techniques for migrating from one protocol family to another have been a source of many design paradigms over the years. However, two have dominated: protocol translation and tunnelling. One well known example is the case of migration from IPv4 to IPv6, which are very similar as opposed to the more substantial differences between IP and ICN. In the case of IPv4/IPv6 migration, both translation and tunnelling approaches were employed. Translation is accomplished by having a special translation service rewriting IP headers on the border of IPv4 and IPv6 networks. Tunnelling has also been extensively employed for IPv4/IPv6 co-existence and achieves heterogeneous traversal, for example, IPv4 traffic over an IPv6 network. There is not much prior work in the area of IP-to-ICN transition and co-existence. For example, an EU project called PURSUIT proposed to have ICN as an underlay for IP/TCP/HTTP-based services, aiming to achieve better network management, and fairer content distribution. It is somehow agreed that an ICN underlay might make some things better for IP-based services.

In that context, for example, Moiseenko, Ilya; Oran, Dave. (2016), "TCP/ICN: Carrying TCP over Content Centric and Named Data Networks," 112-121, 10.1145/2984356.2984357, address that today's Internet applications and protocols are not compatible with ICN protocols and there is no straightforward way of rapidly switching protocol architectures. Network operators incrementally deploying an ICN infrastructure will have to provide compatibility with existing TCP/IP applications and manage co-existence of IP and ICN networks. One approach to co-existence is to allow TCP and the applications using it to work transparently over an ICN substrate instead of over IP. They present a TCP/ICN proxy capable of carrying TCP traffic between TCP/IP endpoints over an ICN network. This is supposed to enable] enables IP applications to communicate with a ICN network core ICN using a Network Attachment Point (NAP) that interprets each IP based protocol. However, that approach follows an ICN centralised paradigm based on rendez-vous points which deployment may be challenging in a scenario with intermittent available links and devices, as is the case of airborne/spaceborne networks.

D. Trossen, M. J. Reed, J. Riihijärvi, M. Georgiades, N. Fotiou and G. Xylomenos, "IP over ICN - The better IP?," 2015 European Conference on Networks and Communications (EuCNC), Paris, France, 2015, pp. 413-417, doi: 10.1109/EuCNC.2015.7194109, present a proposition for ICN that lies outside the typical trajectory of aiming for a wholesale replacement of IP as the internetworking layer of the Internet. Instead, they propose that a careful exploitation of key ICN benefits, expanding previously funded ICN efforts, will enable individual operators to improve the performance of their IP-based services along many dimensions. Alongside the main motivation for their work, they present an early strawman architecture for such an IP-over-ICN proposition.

Keith Scott, Scott Burleigh, "RFC 5050: Bundle protocol specification", RFC Editor, 1 November 2007, describe the end-to-end protocol, block formats, and abstract service description for the exchange of messages (bundles) in Delay Tolerant Networking (DTN).

Other related work includes performance-enhancement proxies (PEPs) that terminate the transport connection received from one endpoint and establish another transport connection to another endpoint. This is typically done to allow the use of a third connection between two PEPs, which could either be a TCP connection optimised for the link or a proprietary protocol running on top of UDP. This is the approach used in the Delay-Tolerant Networking (DTN) architecture, in which case transport connections only exist between custodian nodes. However DTN relies on the existence of an end-to-end new protocol, the Bundle layer, responsive to provide end-to-end acknowledgement of packet reception, which requires changes to the end-hosts and servers.

An advantageous applicability of ICN infrastructures can be their integration into vehicles transporting data clients. The ICN infrastructure of the vehicle can help to store data such that it can travel along with the vehicle independently of its location, thus allowing for data retrieval even if the vehicle itself is disconnected from outside data sources. This is especially the case for aircrafts, which commonly establish data connections to ground stations, possibly via satellite, which may be interrupted or limited, possibly impairing data transmission from the ground stations to data clients residing in the aircraft, including both, technical installations relying on data transmissions, as well as crew members or passengers making use of mobile devices, such as smart phones, tablet computers, laptops or alike.

Hence, one use-case involving ICN is the internetworking between passengers inside an aircraft, using regular Internet applications, land Internet services in the ground (e.g., cloud services) while crossing an airborne networks running ICN in order to ensure good network performance (e.g. low delays), as well as crossing a set of intermittent wireless links (e.g. radio, free space optics) and aircrafts. It is assumed that in this scenario traffic between an aircraft and the Internet may cross several other aircrafts before being transmitted to the ground.

Another use-case is the internetworking between Internet users in the ground with Internet services in the ground while crossing an airborne or a spaceborne constellation. The former can be made of aircrafts interconnected by radio or free space optical links. The latter can be made of LEO satellites with several inter-satellite links. In this scenario the airborne and the spaceborne network run on a ICN platform.

EP 2 985 926 B1 describes a wireless aircraft network comprising a plurality of aircraft having transceiver devices for transceiving wireless communication, a plurality of ground-based network stations having transceiver devices for transceiving wireless communication, and a network operator station configured to store location data regarding the current geographical location of the plurality of aircraft in a location data table of the network operator station and to determine a most efficient network path for each of the plurality of aircraft to one of a plurality of ground-based network stations depending on the current geographical location of the plurality of aircraft and the geographical location of the plurality of ground-based network stations.

EP 2 145 426 B1 relates to a system enabling communication between an aircraft-based computer network and a ground-based computer network, characterised in that the system includes means for establishing a network communication between a ground-based computer network and an aircraft-based computer network via at least one communication medium using a synchronous communication mode.

Methods and systems for enabling communication between ICN based infrastructures and a host-centric paradigm based an infrastructure, as well as for enabling communication between an aircraft-based computer network and a ground-based computer network, as known from the prior art, cannot fully satisfy communication needs in terms of reliability and availability on the one hand, as well as performance and comfort on the other hand.

### Summary

It may thus be seen as an object to provide both, improved reliability and availability, as well as improved performance and comfort, for any type of data communication crossing between ICN based infrastructures and a host-centric paradigm based infrastructure, in particular when it involves data clients located on any kind of vehicle, such as an aircraft. This object is solved by the subject matter of the independent claims.

A data sending method is provided, for sending an internet data packet from at least one sender via a data entry gateway connected to an ICN infrastructure to at least one receiver, wherein the at least one sender is configured as a data host in an end-to-end communication environment, the method comprising the steps of capturing the internet data packet with an ICN entry module of the data entry gateway; creating a data name string for a data payload transported in the internet data packet; storing an association between the data name string and an identification sequence for identifying the internet data packet in an identification map; encapsulating the internet data packet in an ICN data packet; passing the ICN data packet to a forwarding module in order to be stored in an content storage module of the forwarding module, and to be forwarded upon receipt of a respective data interest packet by the forwarding module, the data interest packet indicating a data request by the receiver.

A data entry gateway configured to carry out the steps of a data sending method is provided.

A communication station comprising at least one data entry gateway configured to carry out the steps of a data sending method is provided. The communication station may in particular be a ground station, or at least may be a part of a ground station configured for communicating with a vehicle, in particular an aircraft.

Further developments can be derived from the dependent claims and from the following description.

A data receiving method is provided, for receiving with at least one receiver an internet data packet from at least one sender via a data exit gateway connected to an ICN infrastructure, wherein the at least one receiver is configured as a data client in an end-to-end communication environment, the method comprising the steps of creating a data image of at least as part of an identification map containing data name strings for identifying respective data payloads transported in internet data packets potentially requested by the receiver, and containing identification sequences for identifying the internet data packets; verifying a reachability of at least one sender of the internet data packets; passing a data interest packet indicating a data request by the receiver to a forwarding module in order to be forwarded to an ICN entry module; receiving with an ICN exit module of the data exit gateway an ICN data packet corresponding to the data interest packet and encapsulating an internet data packet; consulting the data image of the identification map for finding a name string identifying the data payload and the respective identification sequence of the internet data packet; mapping the internet data packet into an IP address of the receiver based on the identification sequence; extracting the internet data packet from the received ICN data packet; and sending the internet data packet to the receiver having the mapped IP address.

A data exit gateway configured to carry out the steps of a data receiving method is provided.

A vehicle, in particular an aircraft, comprising at least one data exit gateway configured to carry out the steps of a data receiving method is provided. The vehicle may be configured to communicate with a communication station, in particular a ground station.

The data sending method and data receiving method together constitute a data transmission method comprising respective sending and receiving steps for transmitting internet data traffic via an ICN infrastructure. Hence, the data entry gateway and the data exit gateway together constitute a data transmission system. Respective ICN entry modules and ICN exit modules may be each configured as proxy servers.

This solution enables a transparent usage of TCP/UDP applications on an ICN based network, while respecting the ICN operational model (pull based) and exploiting all the benefits (e.g., in-network caching) that an ICN network brings to challenging communication scenarios such as airborne and spaceborne. The proposed approach combines translation and tunnelling to allow the seamless utilisation of ICN networks by any IP based application (TCP or UDP), including multicast services. The combination of translation and tunnelling is advantageous over tunnelling approaches in that it allows for fully exploiting the potential of an ICN network, such as the usage of in-network caching for delay reduction. Furthermore, the proposed solution does not require any changes to the end-host as well as to the servers. It enables TCP/UDP applications to gather services from an IP network while traversing an ICN network.

Many of the features described with reference to the data sending method and data receiving method may be implemented as device features, or vice versa. Therefore, the description provided in the context of the data sending method and data receiving method applies in an analogous manner also to a data entry gateway and a data exit gateway, respectively. In particular, the steps of the methods and mentioned components involved therein may be implemented as functions of the gateways and any functions of the gateways may be implemented as method steps.

According to an aspect, a data sending method further comprises the step of deleting the association of the data name string and the identification sequence from the identification map. The deletion avoids unnecessary data traffic due to redundant data entries in the identification map and saves storage and computing resources for managing the identification map. Thereby, the data sending method is particularly suitable for efficiently handling both, UDP and TCP/IP based communication.

According to an aspect, the data sending method further comprises the step of receiving an ICN acknowledgement message with the ICN entry module, the ICN acknowledgement message acknowledging receipt of the ICN data packet by a receiver of the internet data packet. This confirms receipt of the ICN data packet to the ICN entry module. Typically, in TCP/IP-protocol based communications, the receiver acknowledges receipt of an internet data packet. The ICN acknowledgement message therefore helps in enabling communications fully in line with the TCP/IP protocol.

According to an aspect, the data sending method further comprises the step of communicating the acknowledgement of receipt by sending an IP acknowledgement packet to the at least one sender from the data entry gateway. This allows for avoiding that lost or discarded IP data packets are being re-sent by the sender. The IP acknowledgement packet therefore helps in enabling efficient TCP/IP-protocol based communications.

According to an aspect, the data sending method further comprises the step of caching the ICN data packet at the data entry gateway. The cached ICN data packet can be deleted, particularly after a time-out. Caching the ICN data packet allows for resending the ICN data packet if no ICN acknowledgement message is received by the data entry gateway. This helps in reducing traffic back from the data entry gateway to the sender for requesting a re-sent off IP data packets in the event that the receiver does not acknowledge receipt.

According to an aspect, the data sending method further comprises the step of receiving at the ICN entry module an interest join packet from the receiver and sending from the ICN entry module an IP multicast join packet to the at least one sender. In particular in multicast scenarios, the receiver may be part of a group or receivers or may be constituted by a group of receivers. Multicast communication can be explicitly ended (upon receipt of a multicast prune message by the ICN entry module), or implicit by a timeout of a defined deadline for the reception of Interest packets, respectively. By establishing multicast communications via interest join packets and explicitly ending them, efficient multicast data transmissions are enabled involving a group of receivers which would otherwise have to request respective data transmissions individually.

According to an aspect, the data receiving method further comprises the step of updating the data image of the identification map in order to take into account any deletion of a name string associated with the identified data payload from the entry identification map upon receipt of the data interest packet by a data entry gateway. The update enables taking into account the deletion and thus again avoids unnecessary data traffic due to redundant data entries in the identification map and saves storage and computing resources for managing the data image of the identification map. Thereby, the data receiving method is particularly suitable for efficiently handling both, UDP and TCP/IP based communication.

According to an aspect, the data receiving method further comprises the step of receiving at the data exit gateway an acknowledgement packet from the receiver; and sending an ICN acknowledgement message with the ICN exit module to an ICN entry gateway, the ICN acknowledgement message acknowledging receipt of the internet data packet by the receiver. Typically, in TCP/IP-protocol based communications, the receiver acknowledges receipt of an internet data packet, and may send a Nack packet when the received internet data packet contained an error or was otherwise unreadable. This allows for avoiding that lost or discarded IP data packets are being re-sent by the sender. The data receiving method therefore allows for enabling efficient TCP/IP-protocol based communications.

According to an aspect, the data receiving method further comprises the step of caching the internet data packet at the data exit gateway. The cached internet data packet can be deleted, particularly after a time-out. Caching the IP packet at the data exit gateway allows for resending the internet data packet from the data exit gateway to the receiver upon receipt of a Nack packet from the receiver, thereby avoiding that the internet packet would have to be re-sent by the sender. Furthermore, cached data can be held available for other receivers upon receipt of a respective data interest packet, thus taking full advantage of the ICN infrastructure. Consequently, the data receiving method allows for highly reliable and efficient communications, in particular when the receiver utilises the TCP/IP protocol.

According to an aspect, the data receiving method further comprises the step of receiving at the ICN exit module an IP multicast prune packet from the receiver and sending from the ICN exit module an interest prune packet to an ICN entry module. Based on the interest prune packet, the ICN entry module can generate another IP multicast prune packet and send it to at least one sender to indicate a lack of interest in the current multicast. In particular in multicast scenarios, as already mentioned, the receiver may be part of a group or receivers or may be constituted by a group of receivers. By explicitly ending multicast communications via interest prune packets, efficient multicast data transmissions are enabled.

### Brief Description of the Drawings

The subject matter will hereinafter be described in conjunction with the following drawing figures, wherein like numerals denote like elements, and wherein:
Fig. 1 is a schematic representation of a data transmission system involving a ground station and a vehicle comprising a data entry gateway and a data exit gateway, respectively.
Fig. 2 is schematic representation of the data entry gateway and the data exit gateway as parts of the data transmission system.
Fig. 3 is schematic representation of the steps of a data transmission method, particularly suited for adapting UDP data communication to an ICN infrastructure.
Fig. 4 is schematic representation of the steps of a data transmission method, particularly suited for adapting TCP data communication to an ICN infrastructure.
Fig. 5 is another schematic representation of the steps of a data transmission method, particularly suited for adapting TCP data communication to an ICN infrastructure.
Fig. 6 is a schematic representation of the steps of a data transmission method, particularly suited for adapting multicast data communication to an ICN infrastructure.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

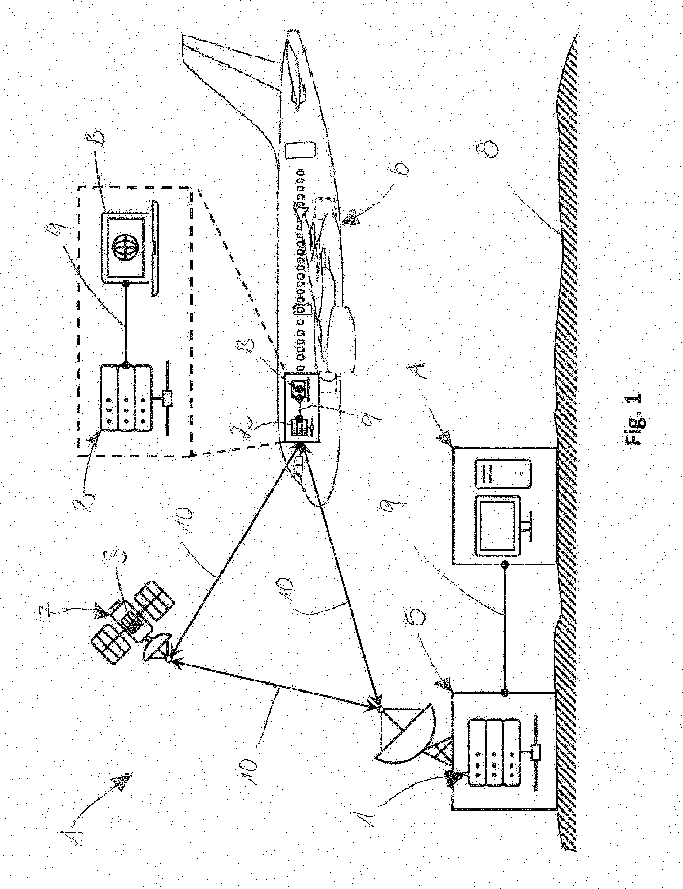

Fig. 1 shows a schematic representation of a data entry gateway 1, a data exit gateway 2 and a data relay unit 3 as parts of a data transmission system 4. The data entry gateway 1 is located at a ground station 5. The data exit gateway 2 is located in a vehicle, 2 in particular an aircraft. The data relay unit 3 may be located at a satellite 7. A sender A may be located at a ground 8 and communicates with the data entry gateway 1 at the ground station 5 via an Internet infrastructure 9, which may involve any suitable wired and wireless communication means, including lines, cables, transceivers, antennas, satellite dishes, and alike. A receiver B is located at the vehicle 6 and communicates with the data exit gateway 2 in the vehicle 6 via the Internet infrastructure 9 as well. Between the data entry gateway 1 at the ground station 5 and the data exit gateway 2 in the vehicle 6, between the data entry gateway 1 at the ground station 5 and the data relay unit 3 at the satellite 7, as well as between the data relay unit 3 at the satellite 7 and the data exit gateway 2 in the vehicle 6, communicate with each other via an ICN infrastructure, which may involve any suitable wired and wireless communication means, including lines, cables, transceivers, antennas, satellite dishes, and alike.

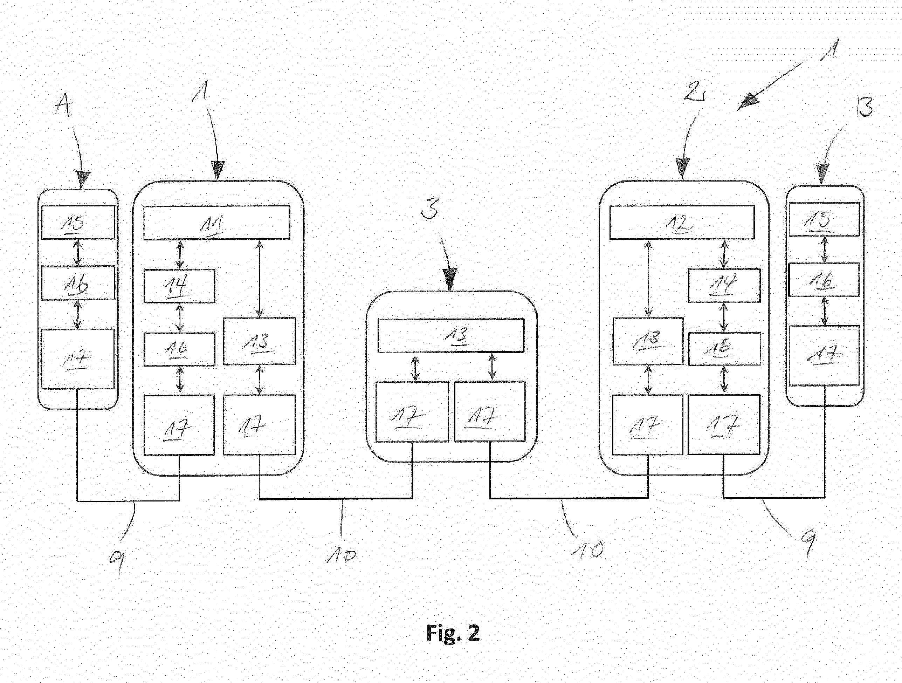

Fig. 2 is schematic representation of the data entry gateway 1, the data exit gateway 2, and the data relay unit 3 as parts of the data transmission system 4. The data entry gateway 1 comprises a ICN entry module 11, for example configured as an ICN proxy. The data exit gateway 2 comprises an ICN exit module 12, for example configured as an ICN proxy as well. The data entry gateway 1, the data exit gateway 2, and the data relay unit 3 each comprise a forwarding module 13, for example configured as an ICN forwarder.

Furthermore, the data entry gateway 1 and the data exit gateway to each provided with a TUN/TAP device driver 14, whereas the sender A and the receiver B, which may be both regarded as applications running on respective computing devices, each comprise a transport layer 15. For communications between the sender A and the data entry gateway 1, as well as between the receiver B and the data exit gateway 2, each of them comprises a network layer 16. The sender A, the receiver B, the data entry gateway 1, the data relay unit 3, the data exit gateway 2 and the data relay unit 3 are provided with link layers 17 connected them to each other.

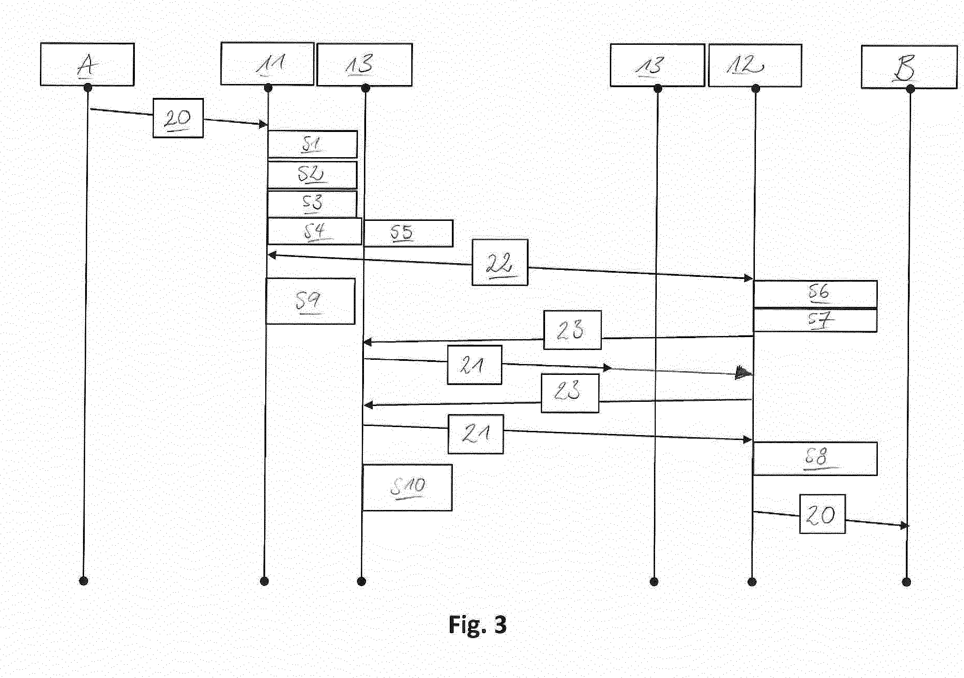

In the sender A, Internet data packets (see Figs. 3 to 6) descent down from the transport layer 15, via the network layer 16 to the link layer 17, which together form a protocol stack. From the link layer 17 of the sender A, the Internet data packets are transmitted via the Internet infrastructure 9 to the link layer 17 of the data entry gateway 1. In the data entry gateway 1, the Internet data packets ascend from the link layer 17 via the network layer 16 and are then captured by the TUN/TAP device driver 14. The ICN entry module 11 then translates the Internet data packets to ICN data packets (see Figs. 3 to 6).

After the translation, the forwarding module 13 of the data entry gateway 1 forwards the ICN data packets to another link layer 17 of the data entry gateway then transmitted to a link layer 17 of the data relay unit 3 via ICN infrastructure 10. The forwarding module 13 of the data relay unit 3 forwards the ICN data packets to another link layer 17 of the data relay unit 3 in order to be transmitted to the link layer 17 of the data exit gateway 2 via the ICN infrastructure.

In the data exit gateway 2, the ICN data packets ascend from the link layer 17 via the forwarding module 13 to the ICN exit module 12 which restores the original Internet data packets and then uses its TUN/TAP device driver 14 to hand over the Internet data packets such that they descend via the network layer 16 to the link layer 17 of the data exit gateway 2. From the link layer 17 of the data exit gateway to, the Internet data packets are transmitted via the ICN infrastructure 10 to the link layer 17 of the receiver B. At the receiver B, the editor data packets ascend the respective protocol stack from the link layer 17 via the network layer 16 to the transport layer 15.

Depending on the data traffic direction, the ICN entry module 11 and the ICN exit module 12 work as forward or reverse proxy, with complementary functions. In other words, depending on the direction of data traffic based on the respective roles of the sender A and the receiver B as sending and/or receiving data, which may alternate between each other, the data entry gateway 1 becomes the data exit gateway to and vice versa. When performing as a forward proxy, the ICN entry module 11 and the data exit module 12 translate from IP semantics to ICN and encapsulating IP data packets into data packets for tunnelling over the ICN infrastructure10. A reverse proxy processes the ICN pull-based state machine and de-encapsulates ICN data packets back to Internet data packets (see Figs. 3 to 6).

The ICN entry module 11 and the ICN exit module 12 deployed as ICN proxies at a boundary between the ICN infrastructure 10 as part of an airborne/spaceborne network at the one side and the Internet infrastructure 9 as part of a terrestrial IP network at the other side, also have the function of advertising to the IP network that it provides reachability to one or more IP prefixes used inside the airborne/spaceborne network. Alternatively, or additionally, these proxies also keep reachability information collected from the IP network in order to serve requests coming from end-users inside the airborne/spaceborne network. Consequently, the nature of the ICN principle, meaning that data (TCP or UDP packets) is requested by Interest packets and returned in Data packets is being respected. This allows to benefit from useful properties of ICN networks such as one-to-one flow balance, and multi-path Interest forwarding.

Fig. 3 is schematic representation of the steps of a data transmission method, particularly suited for adapting UDP data communication between the Internet infrastructure 9 and the ICN infrastructure 10. Here, the sender A sends an Internet data packet 20 which is captured by the ICN entry module 11 in a step S1, in that the ICN entry module 11 checks the protocol code in order to verify if the political code on the head of the Internet data packet 20 is related to TCP or UDP packets, for example. In a step S2, a day the name string is being created, such that an IP name is translated to an ICN name by creating a data name string and calm past in the IP header which will be described more in detail further down below. In a step S3, an association between the data name string and an identification sequence, e.g., a newly created empty name-tuple, for correlating the data name string with the 5-tuple information carried in the received Internet data packet 20, is being stored in an identification map 22. In a step S4, the IP data packet 20 is being encapsulated in an ICN data packet 21.

In a step S5, the ICN data packet 21 is being cashed by the ICN for the 16. In a step S6, the ICN exit module 12 creates an image of the identification map 22 for mapping new entries of identification sequences, e.g., name-tuples. Thereby, the ICN exit module 12 creates a local image of the identification sequences created by the ICN entry module 11. The image can be refreshed periodically, for example based on a signalling procedure, for instance by using an ICN synchronisation protocol such as PSync or ChronoSync. In a step S7, the ICN exit module 12 checks an IP reachability by verifying if it can reach the IP addresses included in the indemnification sequences in the entries of the identification map 22.

When the ICN exit module 12 has verified the reachability of the IP addresses, it can send a corresponding data interest packet 23 to the forwarding module 13 of the ICN entry module 11. In return, the ICN entry module 11 sends the possibly cached corresponding ICN data packet 21 back to the ICN exit module 12 via the forwarding module 13 thereof. This process can be repeated. In a step S8, the ICN exit module 12 then de-encapsulates the Internet data packet 20 from the ICN data packet 21. In other words, the Internet data packets 20 are being extracted from the received ICN data packets 21, and then passed to the protocol stack of the receiver B.

In a step S9, the respective map entries relating to the received Internet data packets 20 can be deleted from the identification map 22. Thereby, the association of the data name string and the identification is being removed from the identification map. Furthermore, in a step S10, the cached data, i.e., ICN data packets 21 can be deleted from the forwarding module 13, e.g., after a timeout.

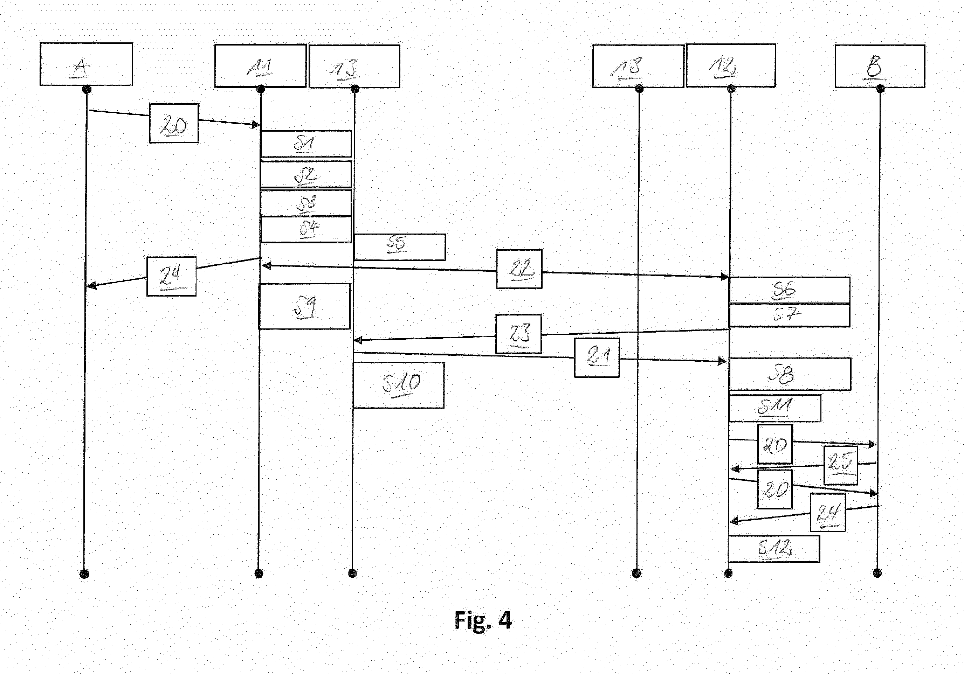

Fig. 4 is schematic representation of the steps of a data transmission method, particularly suited for adapting TCP data communication between the Internet infrastructure 9 and the ICN infrastructure 10. For the sake of brevity and efficiency, only the differences between the method shown in Fig. 3 and the method shown in Fig. 4 will be described in the following. Here, for example after the step S8 of encapsulating the Internet data packet 20, the ICN entry module 11 may return an Internet acknowledgement packet 24 back to the sender A.

Furthermore, after the step S8 of de-encapsulating the Internet data packet 20, in a step S11, the ICN exit module 12 may cache the Internet data packet 20. For example, if the receiver B would then send an Internet Nack packet 25 to the ICN exit module 12, if the Internet data packet 20 was incomplete, faulty, or damaged, or alike, the cached Internet data packet 20 can be re-sent to the receiver B. Assuming that the re-sent Internet data packet 20 was correct and intact, the receiver B can send the respective Internet acknowledgement packet 24 to the ICN exit module 12. In a step S12, after receipt of the Internet acknowledgement packet 24, the ICN exit module 12 can delete the cached Internet data packet 20.

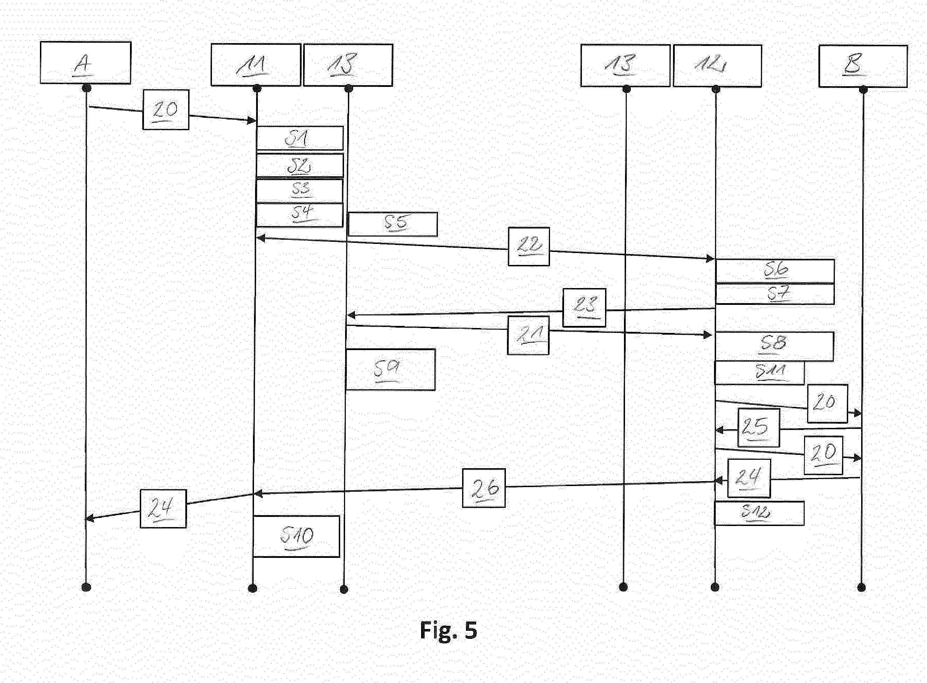

Fig. 5 is another schematic representation of the steps of a data transmission method, particularly suited for adapting TCP data communication between the Internet infrastructure 9 and the ICN infrastructure 10. For the sake of brevity and efficiency, only the differences between the method shown in Fig. 4 and the method shown in Fig. 5 will be described in the following. Here, for example, after receipt of the Internet acknowledgement packet 24 from the receiver B, the ICN exit module 12 can send an ICN acknowledgement message 26 to the ICN entry module 11. After receipt of the ICN acknowledgement message 26, the ICN entry module 11 may send the Internet acknowledgement packet 24 to the sender A.

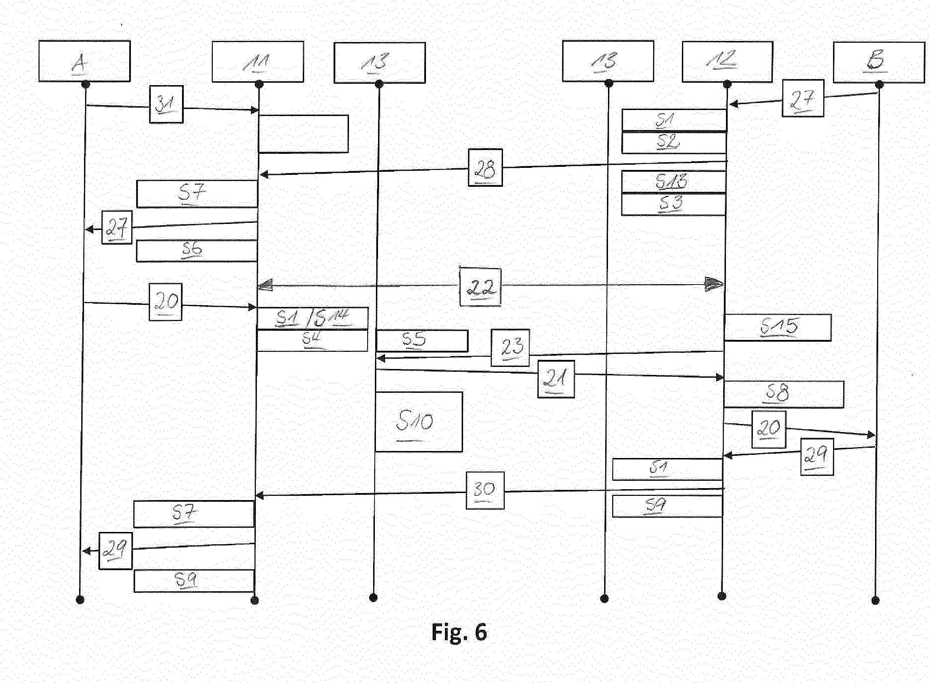

Fig. 6 is a schematic representation of the steps of a data transmission method, particularly suited for adapting multicast data communication between the Internet infrastructure 9 and the ICN infrastructure 10. For the sake of brevity and efficiency, only the differences between the methods shown in Fig. 3 to 5 and the method shown in Fig. 6 will be described in the following. Here, contrary to previously described use cases particularly suited for TCP and UDP, the process starts at the ICN exit module 12 an IP multicast join packet 27 from the receiver B. The ICN exit module 12 performs the step S1 of capturing the IP multicast join packet 27 and verifying the protocol code in the IP header, which should indicate the multicast context, namely a join request by the receiver B.

The ICN exit module 12 then performs a step S13 of creating a join data name string for the data payload transported in the IP multicast join packet 27. Afterwards, the ICN exit module 12 sends an interest join packet 28 to the ICN entry module 11 via the respective forwarding modules 13. The interest join packet 28 contains the name string referring to the join request included in the received IP multicast join packet 27. Since the IP multicast join packet 27 can also contain information about multicast groups to be left, the join data name string in the interest join packet 28 can also include information about the multicast group to prune from. In the step S3, for every multicast session (source, destination), the ICN exit module 12 then creates an association between a data name string and an identification sequence, e.g., a newly created empty name-tuple, for correlating the multicast data name string with the source-group address carried in the received IP multicast join packet 28, which is being stored along with the respective destination in the identification map 22.

For each entry in the identification map 22 related to multicast traffic (e.g., name /[reverse-proxy-name-prefix]/PIM/...), the ICN exit module 12 starts a cycle to send periodic data interest packets 23 to the ICN entry module 11 in order to receive the corresponding ICN data packets 21 to retrieve the correspondent multicast data. When the ICN entry module 11 receives the interest join packet 28, it will perform the step S7 of checking IP reachability based on the source addresses coded in the data name carried in the interest join packet 28, and if the source addresses can be reached, send the corresponding IP multicast join packet 27 with all the information related to sources functioning as the senders A that are located in the Internet infrastructure 9.

After this, in the step S6, the ICN entry module 11 updates the identification map 22, e.g., by creating an image thereof, to obtain the available information about our source-destination pairs encoded in the received interest join packet 28, with the corresponding multicast data name strings. In the step 1, the ICN entry module 11 then starts capturing the Internet data packets 20 having a destination multicast IP address that corresponds to at least some of the entries in the identification map 22. The step S1 can be performed along with a step S14, where the ICN entry module 11 checks the IP destination address. Where there is a match, the ICN entry module 11 proceeds to the step S4 of encapsulating the Internet data packet 20 into the ICN data packet 21. In the step S5, the ICN data packets 21 can then be cached by the forwarding module 13 of the ICN entry module 11 in order to be retrieved up on receipt of the data interest packet 23.

In a step S15, after storing all relevant information on the identification map 22, the ICN exit module 12 starts the already above-mentioned cycle of sending the data interest packets 23 of each of the entries in the identification map 22, for example after a predefined timeout. The ICN exit module 12 will keep sending any of the data interest packets 23 as long as there are valid entries in the identification map 22. When the ICN exit module 12 receives 1 of the ICN data packets 21 based on the corresponding data interest packet 23, the ICN exit module 12 de-encapsulates the Internet data packet 20 in the form of a multicast data packet and will send it to the TCP/IP protocol stack via the TUN/TAP device driver 14 of the ICN exit module 12.

When the ICN exit module 12 captures an IP multicast prune packet 29 via the TUN/TAP device driver 14, it will again perform this step S1 of checking the protocol code in order to verify that a multicast communication type packet is at hand. After the verification, the ICN exit module 12 will send an interest prune packet 30 containing a data name that refers to the prune requests included in the received IP multicast prune packet 29 to the ICN entry module 11. After this, in the step S9, the ICN exit module 12 corresponding multicast entries from the identification map 22. Upon receipt of the interest prune packet of 30, the ICN entry module 11 again performs the step S7 of checking IP reachability of the respective IP sources, i.e., senders A, that are located in the Internet infrastructure 9 connected to the ICN entry module 11. If IP reachability is given, the corresponding IP multicast prune packet 29 with our information related to sources that are located in the Internet infrastructure 9 of the ICN entry module 11 will be sent to the respective senders A. After that, in the step S9, the ICN entry module 11 deletes the corresponding entries from the identification map 22.

In an additional step 16, the ICN entry module 11 may create an IP source reachability for multicast data traffic based on an obtained multicast register 31. In line with a corresponding Multiple Registration Protocol (MRP), operating at the link layer 17, any components of the Internet infrastructure 9, such as switches, bridges, or alike, may register as well as de-register certain attribute values, such as network identifiers and multicast group membership information. This allows for dynamic and/or static configuration of network memberships, facilitating the multicast process.

When in any of the examples, described with reference to Figs. 1 to 6 above, the Internet data packet 20 arrives at the respective ICN entry module 11, it checks the corresponding IP header to verify the type of protocol of the received packet in the step S1. If the protocol type is unicast (TCP or UDP), and in the case of that in UDP traffic the destination address in unicast, the ICN entry module 11 uses the information on the TCP/UDP header to construct a corresponding data name string in the step S2. The process to construct data name strings can be based on a convention able to create hierarchical names from the data collected in the header of Internet data packets 20 according to the following examples:
Name for TCP packets: /ICNnet/TCP/[IP-4-tuple]/[TCP-sequence]/[Wrapper]
- ICNnet: Identification of the ICN infrastructure 10.
- TCP: indicates that this name is related to a packet from a TCP flow.
- IP-4-tuple: includes the source IP address/port number, destination IP address/port numbers.
- TCP-sequence: allows to distinguish between different packets from the same TCP flow. Similar to data chunks in ICN.
- Wrapper: is a random number used to ensure unique names, when the TCP Sequence is reset.

Name for UDP packets: /ICNnet/UDP/[IP-4-tuple]/[Wrapper]
- ICNnet: Identification of the ICN infrastructure 10.
- UDP: indicates that this name is related to a packet from a TCP flow.
- IP-4-tuple: includes the source IP address/port number, destination IP address/port numbers.
- Wrapper: is a random number used to name the created name unique.

In the case of TCP communications, the ICN exit module 12 checks the information on the TCP/UDP header to construct the corresponding data name string related to an internet acknowledgement packet 24 as follows: /ICNnet/TCP/[IP-4-tuple)/[TCP-sequence]/[ACK]/[Wrapper]

If the protocol type is multicast (registration, join, prune) the ICN exit module 12 checks the information on the IP and Multicast headers to construct a corresponding data name string to be sent in the corresponding ICN join or prune Interest packets 28 and 30, respectively. These Interest packets do not aim to collect data but just to transmit group membership information. The format of the data name strings used in the ICN join or prune Interest packets 28 and 30, respectively, can follow an example format as follows:
/ICNnet/Multicast/[Group-Address]/[JNumber]/[Source-Addresses]/[PNumber}/[Source-Addresses]
- ICNnet: Identification of the ICN infrastructure 10.
- Multicast: indicates that this name string is related to a packet from a multicast flow.
- Group-Address: refer to the multicast group
- JNumber: indicates the number of source addresses of the joined data flows
- PNumber: indicates the number of source addresses of the pruned data flows
- Source-Addresses: refer to the list of IP addresses of the joined/pruned multicast data sources.

When the ICN exit module 12 sends the ICN join or prune Interest packets 28 and 30, respectively, it can use the information coded in the carried data name string to create a name for the respective multicast data, based on a format according to the following example:
/ICNnet/Multicast/[Group-Address]/[Source-Address]
- ICNnet: Identification of the ICN infrastructure 10.
- Multicast: indicates that this name is related to a packet from a multicast flow.
- Group-Address: refers to the multicast group.
- Source-Address: refers to IP address of the multicast data source.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: data entry gateway
- 2: data exit gateway
- 3: data relay unit
- 4: data transmission system
- 5: ground station
- 6: vehicle (aircraft)
- 7: satellite
- 8: ground
- 9: Internet infrastructure
- 10: ICN infrastructure
- 11: ICN entry module
- 12: ICN exit module
- 13: forwarding module
- 14: TUN/TAP device driver
- 15: transport layer
- 16: network layer
- 17: link layer
- 20: Internet data packet
- 21: ICN data packet
- 22: identification map
- 23: data interest packet
- 24: Internet acknowledgement packet
- 25: internet Nack packet
- 26: ICN acknowledgement message
- 27: IP multicast join packet
- 28: interest join packet
- 29: IP multicast prune packet
- 30: interest prune packet
- 31: multicast register

- A: sender
- B: receiver

- S1: capturing and/or verification
- S2: creating name string
- S3: associating and/or storing
- S4: encapsulating
- S5: caching ICN packet
- S6: creating image
- S7: checking IP reachability
- S8: de-encapsulating
- S9: deleting association
- S10: deleting entry cache
- S11: caching Internet packet
- S12: deleting exit cache
- S13: creating join data name
- S14: check IP destination address
- S15: starting multicast data interest cycle
- S16: creating IP source reachability

## Claims

1. Data sending method for sending an internet data packet (20) from at least one sender (A) via a data entry gateway (1) connected to an ICN infrastructure (10) to at least one receiver (B), wherein the at least one sender (A) is configured as a data host in an end-to-end communication environment, the method comprising the steps of
capturing (S1) the internet data packet (20) with an ICN entry module (11) of the data entry gateway (1);
creating (S2) a data name string for a data payload transported in the internet data packet (20);
storing (S3) an association between the data name string and an identification sequence for identifying the internet data packet (20) in an identification map (22);
encapsulating (S4) the internet data packet (20) in an ICN data packet (21); passing (S5) the ICN data packet (21) to a forwarding module (13) in order to be stored in a content storage module of the forwarding module (13), and to be forwarded upon receipt of a respective data interest packet (23) by the forwarding module (13), the data interest packet (23) indicating a data request by the receiver (B).

2. Data sending method according to claim 1, further comprising the step of deleting (S9) the association of the data name string and the identification sequence from the identification map (22).

3. Data sending method according to claim 1 or 2, further comprising the step of receiving an ICN acknowledgement message (26) with the ICN entry module (11), the ICN acknowledgement message (26) acknowledging receipt of the ICN data packet (21) by a receiver (B) of the internet data packet (20).

4. Data sending method according to claim 3, further comprising the step of communicating the acknowledgement of receipt by sending an internet acknowledgement packet (24) to the at least one sender (A) from the data entry gateway (1).

5. Data sending method according to claim 4, further comprising the step of caching (S5) the ICN data packet (21) at the data entry gateway (1).

6. Data sending method according to at least one of claims 1 to 5, further comprising the steps of
receiving at the ICN entry module (11) an interest join packet (28) from the receiver (B), and
sending from the ICN entry module (11) an IP join multicast packet (27) to the at least one sender (A).

7. A data entry gateway (1) configured to carry out the steps of a data sending method according to at least one of claims 1 to 6.

8. A communication station (5) comprising at least one data entry gateway (1) according to claim 7.

9. Data receiving method for receiving with at least one receiver (B) an internet data packet (20) from at least one sender (A) via a data exit gateway (2) connected to an ICN infrastructure (10), wherein the at least one receiver (B) is configured as a data client in an end-to-end communication environment, the method comprising the steps of
creating (S6) a data image of at least as part of an identification map (22) containing data name strings for identifying respective data payloads transported in internet data packets (20) potentially requested by the receiver (B), and containing identification sequences for identifying the internet data packets (20);
verifying (S7) a reachability of at least one sender (A) of the internet data packets (20);
passing a data interest packet (23) indicating a data request by the receiver (B) to a forwarding module in order to be forwarded to an ICN entry module (11);
receiving with an ICN exit module (12) of the data exit gateway (2) an ICN data packet (21) corresponding to the data interest packet (23) and encapsulating an internet data packet (20);
consulting the data image of the identification map (22) for finding a name string identifying the data payload and the respective identification sequence of the internet data packet (20);
mapping the internet data packet (20) into an IP address of the receiver (B) based on the identification sequence;
extracting (S8) the internet data packet (20) from the received ICN data packet (21); and
sending the internet data packet (20) to the receiver (B) having the mapped IP address.

10. Data receiving method according to claim 9, further comprising the step of updating the data image of the identification map (22) in order to take into account any deletion of a name string associated with the identified data payload from the entry identification map (22) upon receipt of the data interest packet (23) by a data entry gateway (1).

11. Data receiving method according to claim 9 or 10, further comprising the steps of
receiving at the data exit gateway (2) an internet acknowledgement packet (24) from the receiver (B); and
sending an ICN acknowledgement message (26) with the ICN exit module (12) to an data entry gateway (1), the ICN acknowledgement message (26) acknowledging receipt of the internet data packet (20) by the receiver (B).

12. Data receiving method according to at least one of claims 9 to 11, further comprising the step of caching (S11) the internet data packet (20) at the data exit gateway.

13. Data receiving method according to at least one of claims 9 to 12, further comprising the step of
receiving at the ICN exit module (12) an IP multicast prune packet (29) from the receiver (B), and
sending from the ICN exit module (12) a prune interest packet (30) to an ICN entry module (11).

14. Data exit gateway (2) configured to carry out the steps of a data receiving method according to at least one of claims 9 to 13.

15. Vehicle (6), in particular an aircraft, comprising at least one data exit gateway (2) according to claim 14.
